# EUROPEAN PATENT SPECIFICATION

(11) **EP 2 447 549 B1**
(45) Date of publication and mention of the grant of the patent: **16.12.2015**
(21) Application number: 10306179.2
(22) Date of filing: 27.10.2010
(51) Int. Cl.: F16B 7/04, E04G 7/14, E04G 7/18, E04F 11/18

(54) **A connector of a guardrail assembly**
Verbinder für eine Schutzgeländeranordnung
Connecteur d'un ensemble formant glissière

(43) Date of publication of application: 02.05.2012
(73) Proprietor: Capital Safety Group EMEA, 06511 Carros Cedex (FR)
(72) Inventor: Lara, Pascal, 06140 Vence (FR)
(74) Representative: Decobert, Jean-Pascal

(56) References cited:
- FR-A- 1 112 802
- US-A- 3 887 291

## Description

### BACKGROUND OF THE INVENTION

Guardrail systems assist in preventing workers from walking off of a support structure. Examples of possible applications for guardrail systems include, but are not limited to, areas left undecked during construction, areas proximate the perimeter of the building, elevator shafts, service chases, tower cranes, skylights, bridges, towers, drilling rigs, power and electrical plants, oil refineries, silos, dams, and ships' holds.

A guardrail construction of this type is known from US 3887291. This document discloses the features of the preamble of claim 1.

For the reasons stated above and for other reasons stated below, which will become apparent to those skilled in the art upon reading and understanding the present specification, there is a need in the art for guardrail systems that are quickly and easily installed.

### BRIEF SUMMARY OF THE INVENTION

The above-mentioned problems associated with prior devices are addressed by embodiments of the present invention and will be understood by reading and understanding the present specification. The following summary is made by way of example and not by way of limitation. It is merely provided to aid the reader in understanding some of the aspects of the invention.

According to the invention, a connector for interconnecting a vertical post and a horizontal rail of a guardrail assembly comprises a base, a gate, a fastener, and a friction member. The base includes a rail receiving portion and a post mounting portion. The rail receiving portion includes an aperture. The gate is pivotally connected to the rail receiving portion and has an open position and a closed position. The gate and the rail receiving portion form a bore when the gate is in the closed position and are configured and arranged to receive the horizontal rail within the bore. The fastener interconnects the gate and the rail receiving portion in the closed position thereby securing the horizontal rail therein. The friction member extends through the aperture.

Furthermore, the friction member is configured and arranged to contact the vertical post and the horizontal rail.

Furthermore, the friction member allows for adjustment of the connector along the vertical post.

Furthermore, the friction member prevents the horizontal rail from sliding relative to the connector.

### BRIEF DESCRIPTION OF THE DRAWINGS

The present invention can be more easily understood, and further advantages and uses thereof can be more readily apparent, when considered in view of the detailed description and the following Figures in which:

Figure 1 is a perspective view of a guardrail assembly constructed in accordance with the principles of the present invention;

Figure 2 is perspective view of a mounting bracket of the guardrail assembly shown in Figure 1;

Figure 3 is a cross-section view of the mounting bracket shown in Figure 2;

Figure 4 is a perspective view of a vertical post of the guardrail assembly shown in Figure 1;

Figure 5 is a cross-section view of the vertical post shown in Figure 4;

Figure 6 is a perspective view of another embodiment vertical post of the guardrail assembly shown in Figure 1;

Figure 7 is a cross-section view of the vertical post shown in Figure 6;

Figure 8 is a perspective view of a connector of the guardrail assembly shown in Figure 1;

Figure 9 is a top view of the connector shown in Figure 8;

Figure 10 is a bottom view of the connector shown in Figure 8;

Figure 11 is a left side view of the connector shown in Figure 8;

Figure 12 is a right side view of the connector shown in Figure 8;

Figure 13 is a front view of the connector shown in Figure 8;

Figure 14 is a rear view of the connector shown in Figure 8;

Figure 15 is a front perspective view of a base of the connector shown in Figure 8;

Figure 16 is a rear perspective view of the base shown in Figure 15;

Figure 17 is a cross-section view of the base shown in Figure 15;

Figure 18 is a front perspective view of a gate of the connector shown in Figure 8;

Figure 19 is a rear perspective view of the gate shown in Figure 18;

Figure 20 is a cross-section view of the gate shown in Figure 18;

Figure 21 is an exploded front perspective view of the connector shown in Figure 8;

Figure 22 is an exploded rear perspective view of the connector shown in Figure 8;

Figure 23 is an exploded top perspective view of the connector shown in Figure 8;

Figure 24 is a perspective view of the mounting bracket shown in Figure 2 connected to the vertical post shown in Figure 4;

Figure 25 is a cross-section view of the mounting bracket and the vertical post shown in Figure 24 connected to a support structure;

Figure 26 is a perspective view of the connector shown in Figure 8 in an open position connected to the vertical post shown in Figure 4;

Figure 27 is a perspective view of the connector and the vertical post shown in Figure 26, the connector in a closed position connected to a horizontal rail of the guardrail assembly shown in Figure 1;

Figure 28 is a top view of the connector and the vertical post shown in Figure 26, the connector in a closed position; and

Figure 29 is a right side view of the connector, the vertical post, and the horizontal rail shown in Figure 27.

In accordance with common practice, the various described features are not drawn to scale but are drawn to emphasize specific features relevant to the present invention. Reference characters denote like elements throughout the Figures and the text.

### DETAILED DESCRIPTION OF THE INVENTION

In the following detailed description, reference is made to the accompanying drawings, which form a part hereof, and in which is shown by way of illustration embodiments in which the inventions may be practiced. The following detailed description is, therefore, not to be taken in a limiting sense, and the scope of the present invention is defined only by the claims and equivalents thereof.

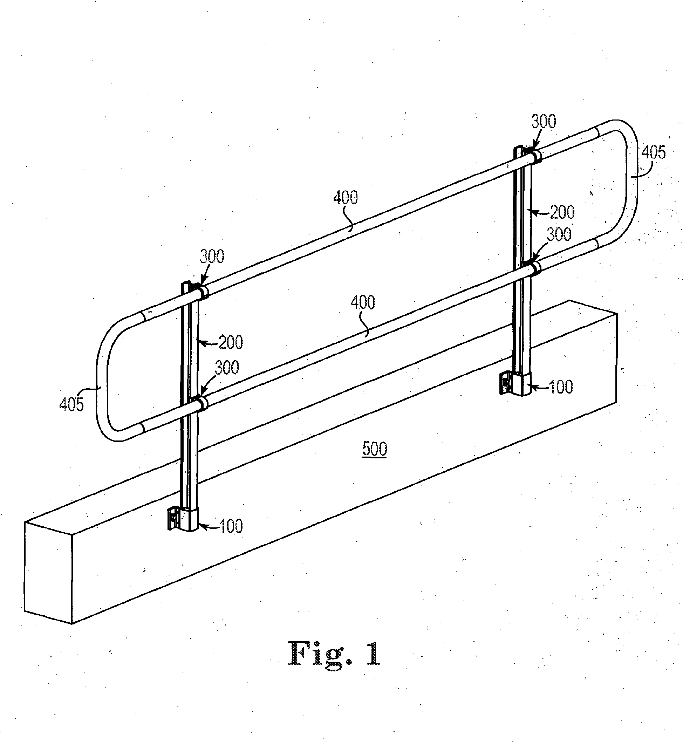

A guardrail assembly constructed in accordance with the principles of the present invention includes a mounting bracket designated by the numeral 100, a vertical post designated by the numeral 200 or 200', a connector designated by the numeral 300, and a horizontal rail designated by the numeral 400 in the drawings. The guardrail assembly is shown in Figure 1.

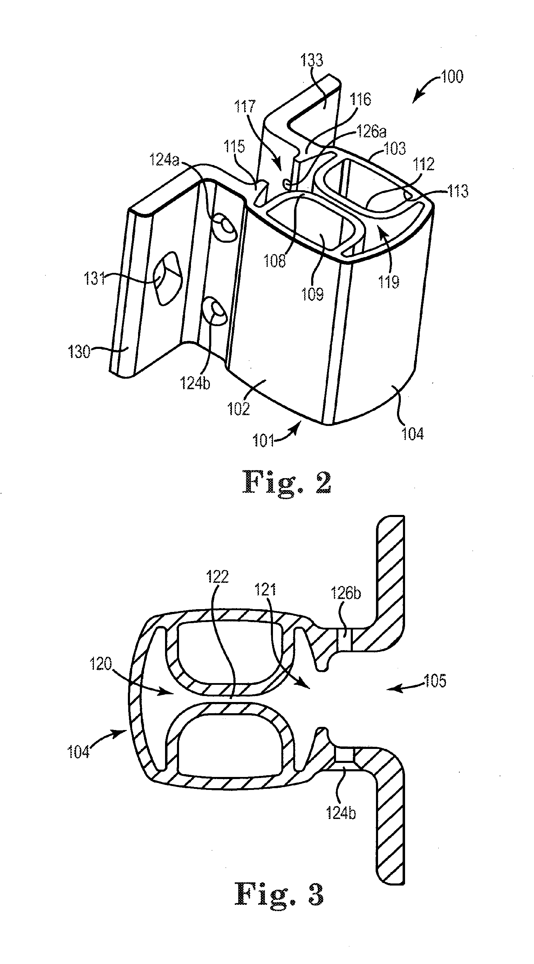

The mounting bracket 100, shown in Figures 2 and 3, includes a base 100 with a first side 102, a second side 103, a front 104, and a rear 105. The base 100 is generally U-shaped with the open portion proximate the rear 105. A first U-shaped portion 108 extends from proximate the front 104 and the first side 102, inward proximate the center of the base 100, and to proximate the rear 105 and the first side 102. An aperture 109 is formed by the first U-shaped portion 108 and the first side 102. A second U-shaped portion 112 extends from proximate the front 104 and the second side 103, inward proximate the center of the base 100, and to proximate the rear 105 and the second side 103. An aperture 113 is formed by the second U-shaped portion 112 and the second side 103. A first protrusion 115 extends inward proximate the first side 102 and the rear 105 and a second protrusion extends inward proximate the second side 103 and the rear 105. The protrusions 115 and 116 form an opening 117 into a cavity 119. The cavity 119 is formed by the first protrusion 115, the first side 102, the front 104, the second side 103, second protrusion 116, and the U-shaped portions 108 and 112. The cavity 119 is generally I-shaped including a channel portion 122 interconnecting a front portion 120 and a rear portion 121. The cavity 119 is configured and arranged to receive the vertical post 200.

Proximate the first protrusion 115 a first L-shaped flange 130 extends outward from the rear 105 and proximate the second protrusion 116 a second L-shaped flange 133 extends outward from the rear 105. The first flange 130 includes first apertures 124a and 124b proximate the first protrusion 115, and the second flange 133 includes second apertures 126a and 126b proximate the second protrusion 116. Apertures 124a and 126a are aligned and apertures 124b and 126b are aligned so that fasteners 138 extend therethrough. The apertures 124a and 124b are preferably countersunk to receive the heads of the fasteners 128. The first flange 130 includes a slot 131 and the second flange 133 includes a slot (not shown). Fasteners 138 are inserted through the slots to connect the flanges to a support structure 500. The support structure 500 could be a concrete structure, a wood structure, or a metallic structure forming a wall, floor, roof, or other suitable structure.

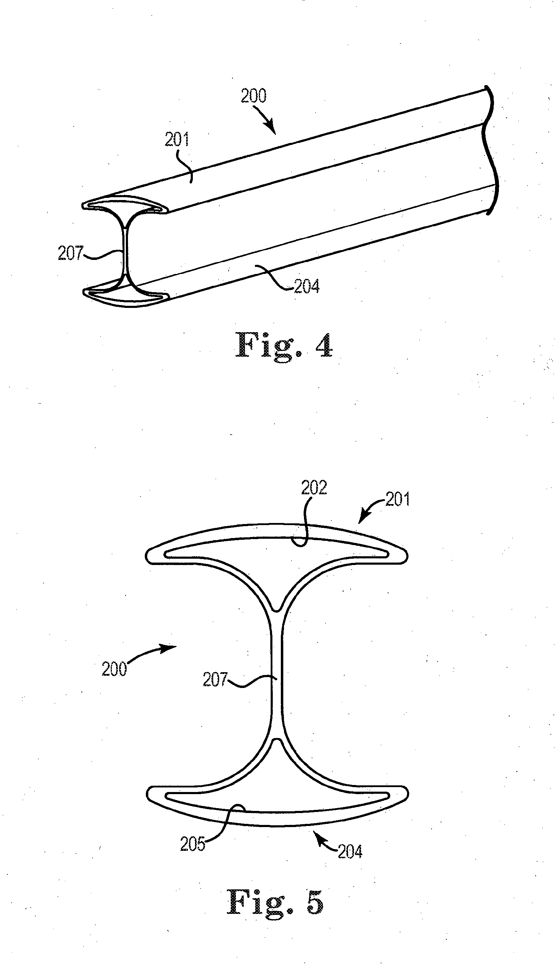

As shown in Figures 4 and 5, the vertical post 200 is preferably generally I-shaped and includes a connecting portion 207 interconnecting a first portion 201 and a second portion 204. The first portion 201 includes a bore 202 and the second portion 204 includes a bore 205. The bores 202 and 205 reduce the weight of the post 200. The vertical post 200 is preferably made of metal such as aluminum, stainless steel, or galvanized steel or could be made of fiberglass or a composite material but any suitable material could be used.

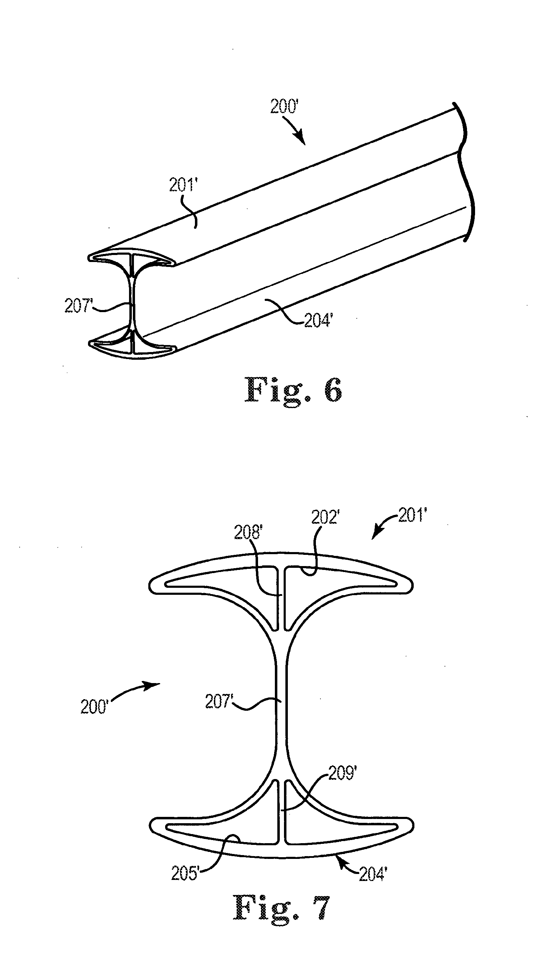

Alternatively, as shown in Figures 6 and 7, a vertical post 200' could be used. The vertical post 200' is preferably also generally I-shaped and includes a connecting portion 207' interconnecting a first portion 201' and a second portion 204'. The first portion 201' includes a bore 202' and a reinforcement portion 208', and the second portion 204' includes a bore 205' and a reinforcement portion 209'. The bores 202' and 205' reduce the weight of the post 200' and the reinforcement portions 208' and 209' provide additional strength to the post 200'. The vertical post 200' is preferably made of metal such as aluminum, stainless steel, or galvanized steel or could be made of fiberglass or a composite material but any suitable material could be used.

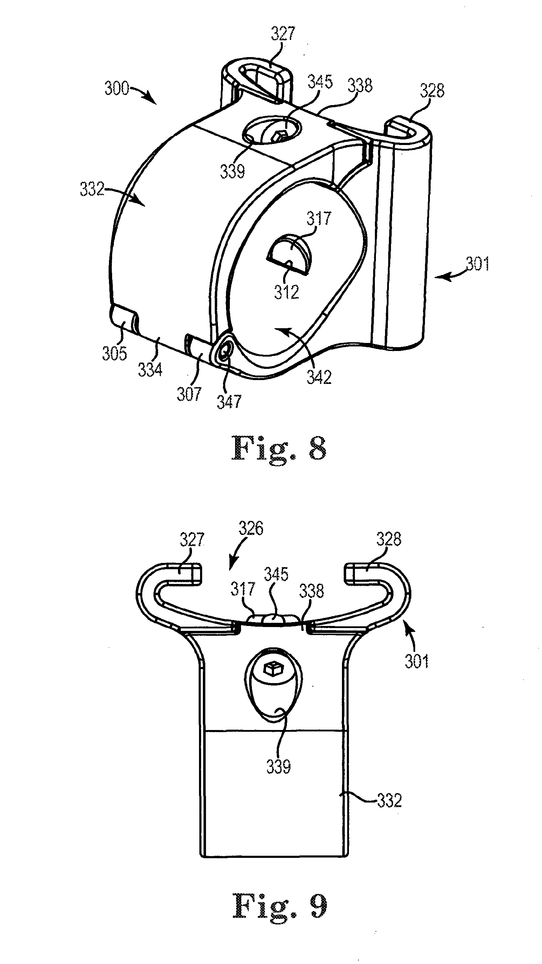

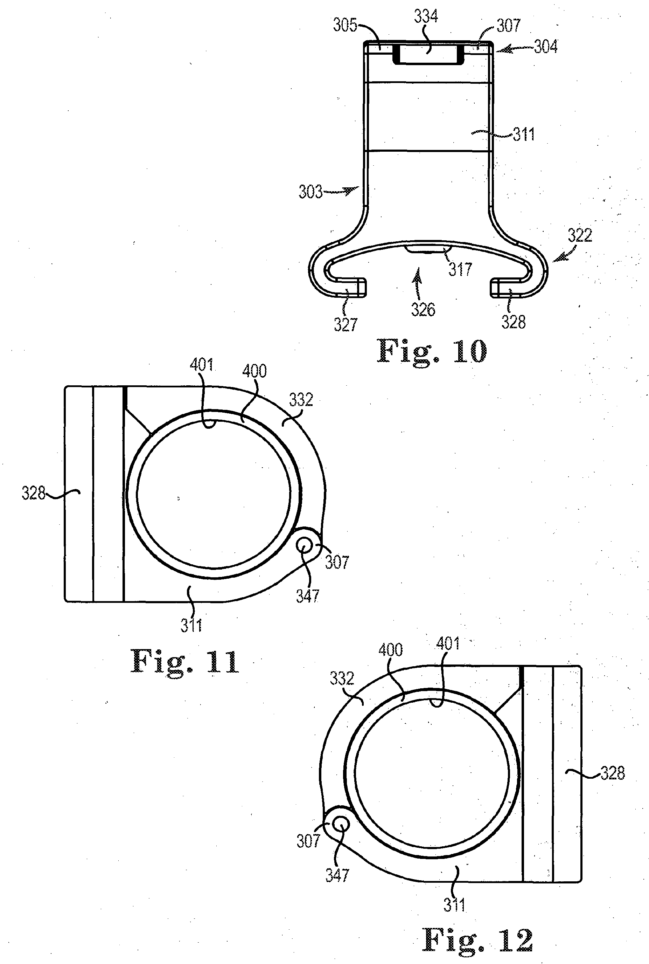

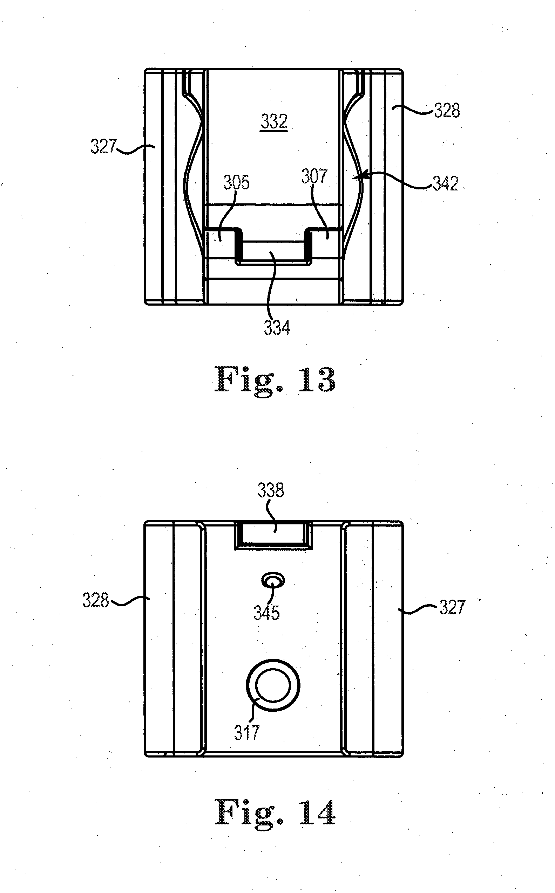

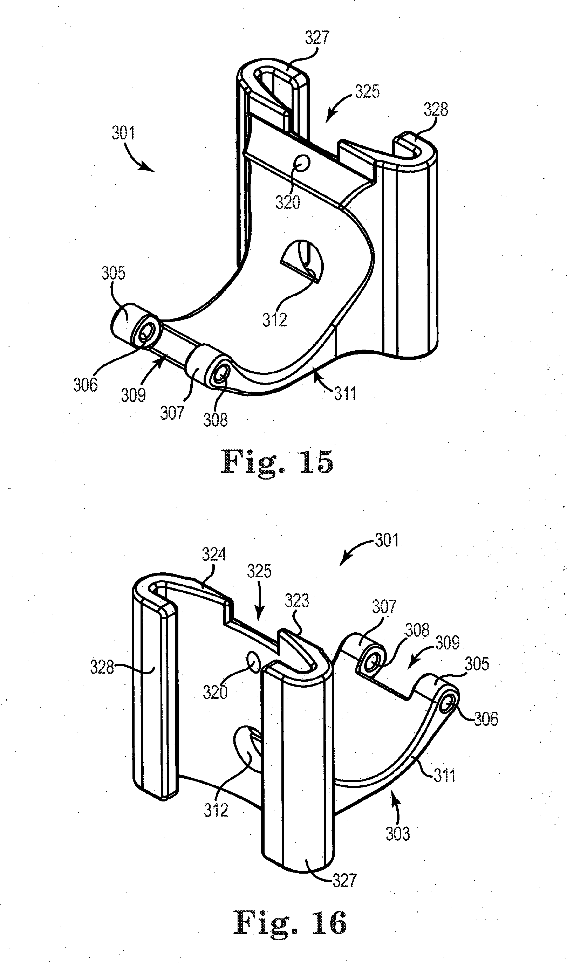

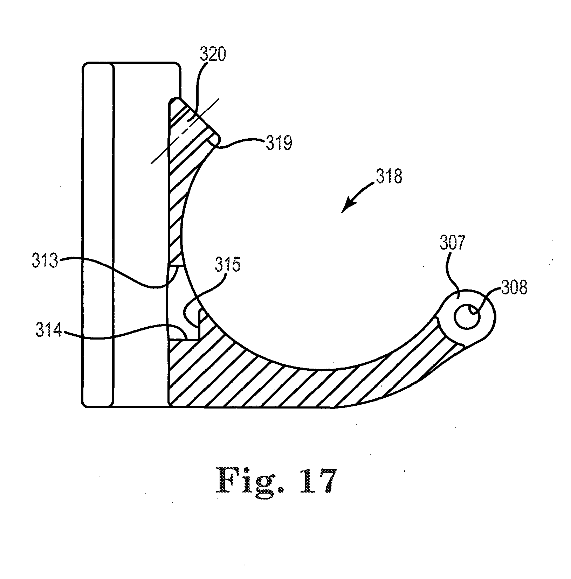

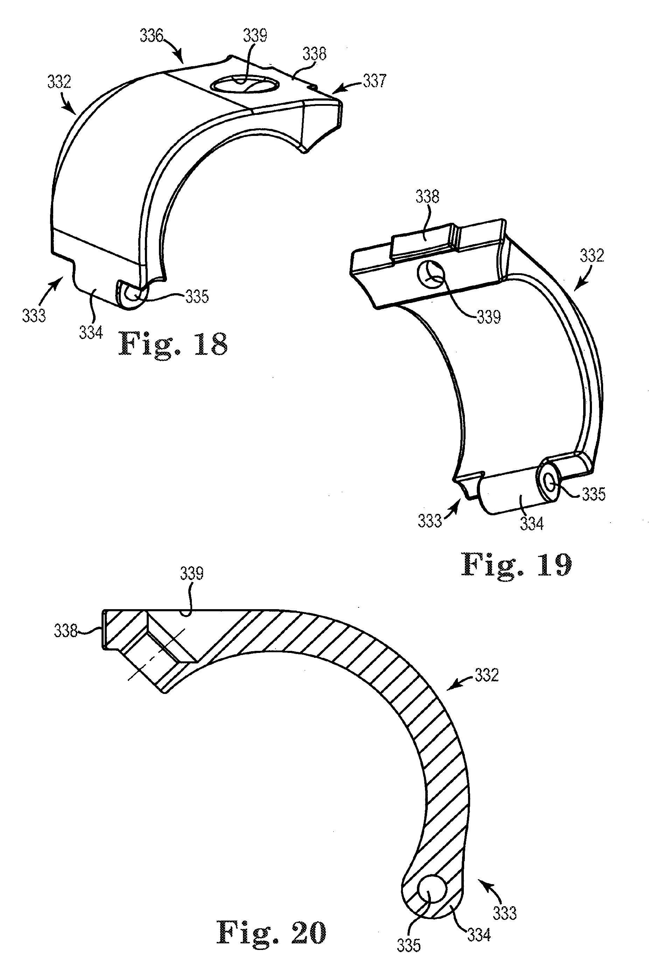

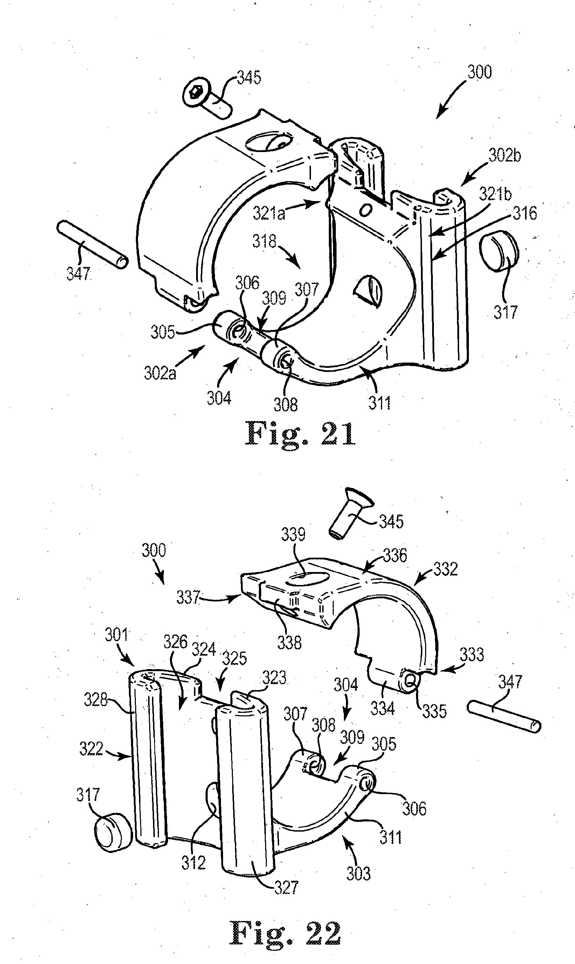

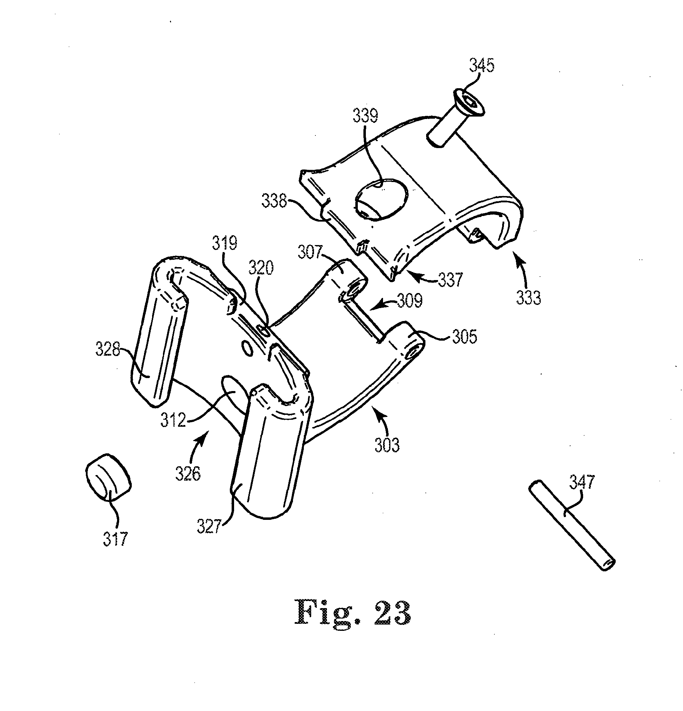

As shown in Figures 8-14 and 21-23, the connector 300 includes a base 301, which is shown in Figures 15-17, and a gate 332, which is shown in Figures 18-20. The base 301 has a front side 302a and a rear side 302b and includes a rail receiving portion 303 proximate the front side 302a and a post mounting portion 322 proximate the rear side 302b.

The rail receiving portion 303 includes a first side 304 proximate the front side 302a, a second side 316 proximate the rear side 302b, an intermediate portion 311 interconnecting the first side 304 and the second side 316, a left side 321 a, and a right side 321b. The rail receiving portion 303 is curved and the first and second sides 304 and 316 form an opening 318. The first side 302 includes a first cylinder 305 with a first bore 306, a second cylinder 307 with a second bore 308, and an opening 309 between the cylinders. The second side 316 includes a top 319 with a threaded bore 320. Proximate the intermediate portion 311 and the second side 316 is an aperture 312 formed by a top 313, a bottom 314, and a stop surface 315. The aperture 312 is semicircular-shaped proximate the front and circular-shaped proximate the rear. A friction member 317 is cylindrical-shaped and configured and arranged to fit within the aperture 312 so that a portion of its front extends through the semicircular-shaped portion of the aperture 312 and its rear extends through the rear of the aperture 312. The stop surface 315 prevents the friction member 317 from being pushed through the front of the aperture 312. The friction member 317 is preferably made of a rubber material such as polyurethane but any suitable material could be used.

The post mounting portion 322 includes a first side 323 and a second side 324. The first side 323 extends upward and outward from proximate the left side 321 a and the second side 316, and the second side 324 extends upward and outward from proximate the right side 321b and the second side 316. There is a gap 325 between the first side 323 and the second side 324. The first side 323 includes a first receiving portion 327 that is U-shaped, and the second side 324 includes a second receiving portion 328 that is U-shaped. The first and second receiving portions 323 and 324 form a channel 326.

The gate 332 includes a front portion 333, a top 336, and a rear portion 337. The front portion 333 includes a cylinder 334 with a bore 335 proximate the center, and the rear portion 337 includes an extension 338 extending outward proximate the center. The top 336 includes a threaded bore 339. The threaded bore 339 is preferably partially threaded and countersunk as shown in Figure 20.

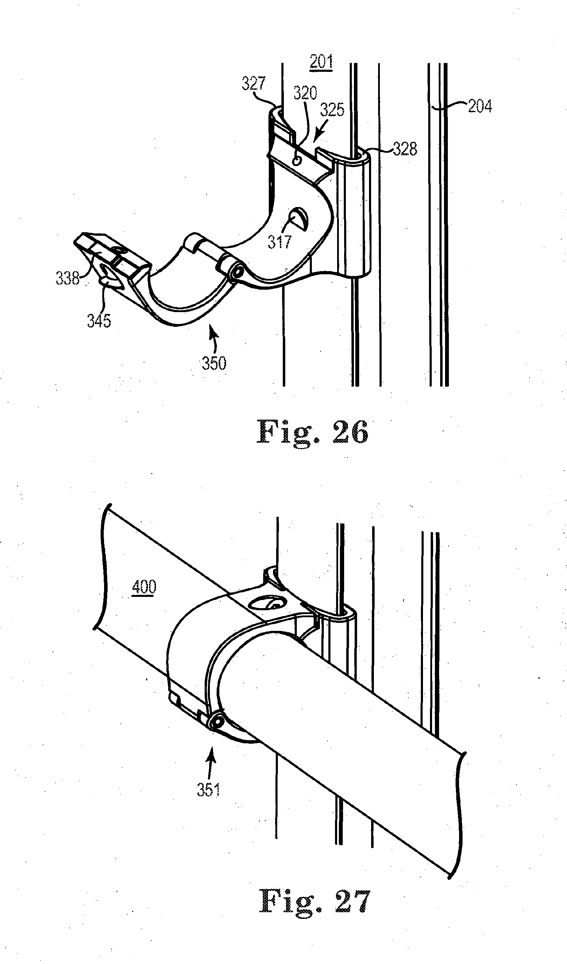

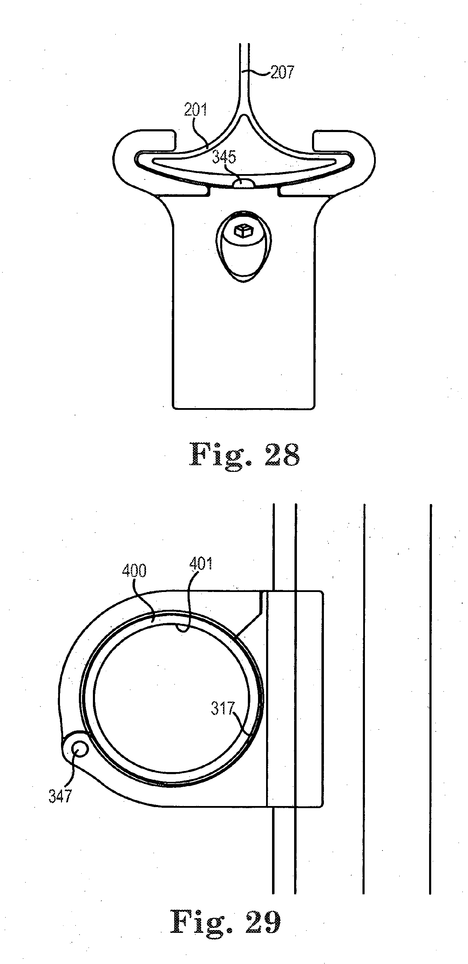

The gate 332 is pivotally connected to the base 301. The cylinder 334 is positioned within the opening 309 between the cylinders 305 and 307 so that the bores 306, 335, and 308 are aligned. Fastener 347 extends through bores 306, 335, and 308 to pivotally connect the front portion 333 of the gate 332 to the first side 304 of the rail receiving portion 303. The gate 332 pivots relative to the fastener 347 to move between an open position 350 and a closed position 351. The open position 350 is shown in Figure 26 and the closed position 351 is shown in at least Figures 27 and 29. In the closed position 351, the extension 338 is positioned within the gap 325 and the threaded bore 339 is aligned with the threaded bore 320. Fastener 345 extends through threaded bore 339 and threaded bore 320 to secure the gate 332 in the closed position 351. The gate 332 is curved so that the gate 332 and the rail receiving portion 303 form a bore 342 configured and arranged to receive the horizontal rail 400 when the gate 332 is in the closed position 351.

The horizontal rail 400 is preferably cylindrical and includes a bore 401 to reduce its weight. The horizontal rail 400 is shown in Figures 27 and 29. The horizontal rail 400 is preferably made of metal such as aluminum, stainless steel, or galvanized steel or could be made of fiberglass or a composite material but any suitable material could be used.

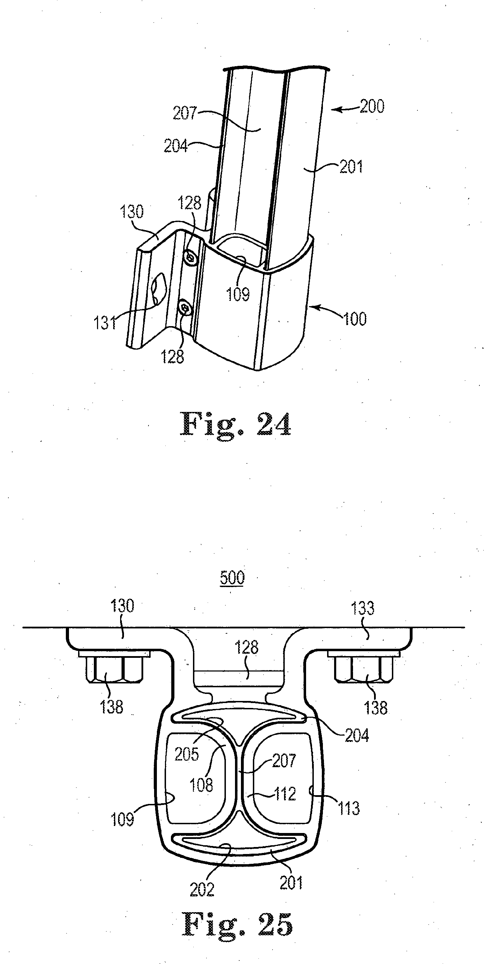

To assemble the guardrail assembly, the vertical post 200 or 200' is inserted into the cavity 119 of the mounting bracket 100. The first portion 201 or 201' is positioned within the cavity's front portion 120, the connecting portion 207 or 207' is positioned within the cavity's channel 122, and the second portion 204 or 204' is positioned within the cavity's rear portion 121. The vertical post 200 is shown connected to the mounting bracket 100 in Figures 24 and 25. A fastener 128 is inserted through the bores 124a and 126a and a fastener 128 is inserted through the bores 124b and 126b. The fasteners 128 move the sides 102 and 103 of the mounting bracket 100 closer together to increase the friction between the mounting bracket 100 and the vertical post 200 or 200' so that the vertical post 200 or 200' does not easily slide relative to the mounting bracket 100. The slots of the flanges 130 and 133 are slanted to accommodate such movement if the mounting bracket 100 is secured to the support structure 500 first with fasteners 138.

The first portion 201 or 201' of the vertical post 200 or 200' is inserted into the channel 326 of the connector's post mounting portion 322. This is shown in Figure 26. To adjust the height of the connector 300 and thus the height of the horizontal rail 400 along the vertical post 200 or 200', the connector 300 is slid along the length of the vertical post 200 or 200'. The friction member 317 allows the connector 300 to be slid along the length of the vertical post 200 or 200' to position the connector 300 at a desired height and provides sufficient friction so that the connector 300 can be held in place by the friction.

The gate 332 is positioned in the open position 350, as shown in Figure 26, so that the horizontal rail 400 can be inserted through the opening 318 and cradled by the intermediate portion 311. The open position 350 allows access to the opening 318. The gate 332 is then positioned in the closed position 351 so that the horizontal rail 400 is extending through the bore 342 formed by the rail receiving portion 303 and the gate 332. This is shown in Figure 27. In the closed position 351, the gate 332 spans the opening 318 thereby preventing access to the opening 318.

Once the connector 300 is at the desired height, the fastener 345 is inserted through the bores 339 and 320 and contacts the vertical post 200 or 200' as shown in Figure 28. The fastener 345 exerts pressure on the first portion 201 or 201' of the vertical post 200 or 200' to deform by deflection the portion contacted by the fastener 345 to prevent sliding of the connector 300 on the vertical post 200 or 201'. The friction member 317 is sandwiched and compressed between the vertical post 200 or 200' and the horizontal rail 400 to increase pressure against the horizontal rail 400. The friction member 317 pushes the horizontal rail 400 against the gate 332. This is shown in Figure 29. Thus, the friction member 317 contacts the vertical post 200 or 200' and the horizontal rail 400, pushes the horizontal rail 400 against the gate, and assists in preventing the horizontal rail 400 from sliding relative to the connector 300 due to the friction between the friction member 317 and the horizontal rail 400.

Assembly of any additional components of the guardrail assembly is similarly completed. Although it is recognized that a horizontal rail 400 could be used with a connector 300, a vertical post 200 or 200', and a mounting bracket 100 proximate each end of the horizontal rail 400, any desired number and configuration of components could be used. For example, for a longer horizontal rail 400, at least another vertical post 200, connector 300, and mounting bracket 100 could be used proximate an intermediate portion of the horizontal rail 400. For example, as shown in Figure 1, two horizontal rails 400 could be connected to two vertical posts 200, each horizontal rail 400 connected to each vertical post 200 with a connector 300, and each vertical post 200 could be connected to the support structure 500 with a mounting bracket 100. An end rail 405 could be used to connect each of the corresponding ends of the two horizontal rails 400.

The friction member 317 allows for quick and easy installation of the guardrail assembly because the height of the connector 300 and thus the height of the horizontal rail 400 can be quickly and easily adjusted and because the friction member 317 assists in preventing the horizontal rail 400 from sliding relative to the connector 300.

The above specification, examples, and data provide a complete description of the manufacture and use of the composition of embodiments of the invention. Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the invention. Therefore, it is manifestly intended that this invention be limited only by the claims and the equivalents thereof.

## Claims

1. A connector (300) for interconnecting a vertical post (200, 200') and a horizontal rail (400) of a guardrail assembly, comprising:
a base (301) including a rail receiving portion (303) and a post mounting portion (322), the rail receiving portion (303) including an aperture (312);
a gate (332) being pivotally connected to the rail receiving portion (303), the gate (332) having an open position (350) and a closed position (351), the gate (332) and the rail receiving portion (303) forming a bore (342) when the gate (332) is in the closed position (351), the gate (332) and the rail receiving portion (303) being configured and arranged to receive the horizontal rail (400) within the bore (342);
a fastener (345) interconnecting the gate (332) and the rail receiving portion (303) in the closed position (351) thereby securing the horizontal rail (400) therein; and
a friction member (317) extending through the aperture (312),
**characterized in that** the fastener (345) extends through the rail receiving portion (303) so as to be capable of contacting the vertical post (200, 200') for securing the connector (300) to the vertical post (200, 200').

2. The connector of claim 1, wherein the aperture (312) is proximate the post mounting portion (322).

3. The connector of claim 2, wherein the friction member (317) is configured and arranged to contact the vertical post (200, 200') and the horizontal rail (400).

4. The connector of any of the preceding claims, wherein the base (301) includes a front side (302a) and a rear side (302b) and the rail receiving portion .(303) includes a first side (304) proximate the front side (302a), a second side (316) proximate the rear side (302b), and an opening (318) between the first side (304) and the second side (316).

5. The connector of claim 4, wherein the aperture (312) is proximate the second side (316).

6. The connector of claim 4 or 5, wherein the post mounting portion (322) is proximate the rear side (302b).

7. The connector of any of claims 4 to 6, wherein the gate (332) has a front portion (333) and a rear portion (337), the front portion (333) being pivotally connected to the rail receiving portion (303) proximate the front side (302a), the open position (350) allowing access to the opening (318) and the closed position (351) spanning the opening (318) thereby preventing access to the opening (318), the rear portion (337) of the gate (332) being proximate the rear side (302b) when in the closed position (351).

8. The connector of any of the preceding claims, wherein the fastener (345) is countersunk relative to the gate (332).

9. The connector of any of the preceding claims, wherein the friction member (312) is made of a rubber material.

10. The connector of the preceding claim, wherein the rubber material is polyurethane.

11. A guardrail assembly comprising a mounting bracket (100), a vertical post ((200, 200'), a horizontal rail (400) **characterized in that** it comprises a connector according to any of the preceding claims.

12. The guardrail assembly of the preceding claim, wherein the fastener (345) is configured and arranged for exerting a pressure on the vertical post (200, 200') to deform the vertical post (200, 200') by deflection to prevent sliding of the base (301) along the vertical post (200, 200').

13. The guardrail assembly of any of the two preceding claims, comprising a connector according to claim 3 and wherein the friction exerted between the friction member (317) and the vertical post (200, 200') is configured to allow for adjustment of the connector (300) along the vertical post (200, 200').

14. The guardrail assembly of the preceding claims, wherein the friction exerted by the friction member (312) on the horizontal rail (400) is configured to prevent the horizontal rail (400) from sliding relative to the connector (300).

## Patentansprüche

1. Verbinder (300) zum Verbinden eines vertikalen Ständers (200, 200') mit einem horizontalen Holm (400) einer Schutzgeländeranordnung, folgendes umfassend:
eine Basis (301), einen Holmaufnahmeabschnitt (303) und einen Ständermontageabschnitt (322) umfassend, wobei der Holmaufnahmeabschnitt (303) eine Öffnung (312) umfasst;
einen Verschluss (332), der schwenkbar mit dem Holmaufnahmeabschnitt (303) verbunden ist, wobei der Verschluss (332) eine offene Position (350) und eine geschlossene Position (351) aufweist, und der Verschluss (332) und der Holmaufnahmeabschnitt (303) ein Loch (342) bilden, wenn sich der Verschluss (332) in der geschlossenen Position (351) befindet, wobei der Verschluss (332) und der Holmaufnahmeabschnitt (303) konfiguriert und
ausgeführt sind, um den horizontalen Holm (400) im Loch (342) aufzunehmen;
eine Klemme (345) zum Verbinden des Verschlusses (332) und des Holmaufnahmeabschnitts (303) in der geschlossenen Position (351) und um dadurch den horizontalen Holm (400) darin zu blockieren; und
ein Reibelement (317), das sich durch die Öffnung (312) erstreckt,
**dadurch gekennzeichnet, dass** die Klemme (345) durch den Holmaufnahmeabschnitt (303) verläuft, um in der Lage zu sein, den vertikalen Ständer (200, 200') zu berühren, um den Verbinder (300) am vertikalen Ständer (200, 200') zu blockieren.

2. Verbinder nach Anspruch 1, wobei die Öffnung (312) nahe dem Ständermontageabschnitt (322) liegt.

3. Verbinder nach Anspruch 2, wobei das Reibelement (317) konfiguriert und ausgeführt ist, um den vertikalen Ständer (200, 200') und den horizontale Holm (400) zu berühren.

4. Verbinder nach irgendeinem der vorherigen Ansprüche, wobei die Basis (301) eine Vorderseite (302a) und eine Rückseite (302b) umfasst und der Holmaufnahmeabschnitt (303) eine erste Seite (304) nahe der Vorderseite (302a) und eine zweite Seite (316) nahe der Rückseite (302b) umfasst, sowie eine Öffnung (318) zwischen der ersten Seite (304) und der zweiten Seite (316).

5. Verbinder nach Anspruch 4, wobei sich die Öffnung (312) nahe der zweiten Seite (316) befindet.

6. Verbinder nach Anspruch 4 oder 5, wobei sich der Ständermontageabschnitt (322) nahe der Rückseite (302b) befindet.

7. Verbinder nach irgendeinem der Ansprüche 4 bis 6, wobei der Verschluss (332) einen vorderen Abschnitt (333) und einen hinteren Abschnitt (337) aufweist, wobei der vordere Abschnitt (333) in der Nähe der Vorderseite (302a) schwenkbar mit dem Holmaufnahmeabschnitt (303) verbunden ist, wobei die offene Position (350) den Zugriff auf die Öffnung (318) freigibt und die geschlossene Position (351) die Öffnung (318) überbrückt, und somit den Zugriff auf die Öffnung (318) unterbindet, wobei der hintere Abschnitt (337) des Verschlusses (332) in der geschlossenen Position (351) nahe an der Rückseite (302b) liegt.

8. Verbinder nach irgendeinem der vorherigen Ansprüche, wobei die Klemme (345) im Verhältnis zum Verschluss (332) versenkt ist.

9. Verbinder nach irgendeinem der vorherigen Ansprüche, wobei Reibelement (312) aus einem Gummimaterial gefertigt ist.

10. Verbinder nach dem vorherigen Anspruch, wobei das Gummimaterial Polyurethan ist.

11. Schutzgeländeranordnung, eine Halterung (100), einen vertikalen Ständer (200, 200'), einen horizontalen Holm (400) umfassend, **dadurch gekennzeichnet, dass** sie einen Verbinder nach irgendeinem der vorherigen Ansprüche umfasst.

12. Schutzgeländeranordnung nach dem vorherigen Anspruch, wobei die Klemme (345) konfiguriert und ausgeführt ist, um einen Druck auf den vertikalen Ständer (200, 200') auszuüben, um den vertikalen Ständer (200, 200') durch Biegen zu verformen, um ein Gleiten der Basis (301) entlang des vertikalen Ständers (200, 200') zu verhindern.

13. Schutzgeländeranordnung nach irgendeinem der zwei vorherigen Ansprüche, einen Verbinder nach Anspruch 3 umfassend, und wobei sich die Reibung, die zwischen dem Reibelement (317) und dem vertikalen Ständer (200, 200') ansteht, konfiguriert ist, um die Einstellung des Verbinders (300) entlang des vertikalen Ständers (200, 200') zu ermöglichen.

14. Schutzgeländeranordnung nach den vorherigen Ansprüchen, wobei die Reibung, die durch das Reibelement (317) auf den horizontalen Holm (400) ausgeübt wird, konfiguriert ist, um ein Abgleiten des horizontalen Holms (400) im Verhältnis zum Verbinder (300) zu verhindern.

## Revendications

1. Connecteur (300) pour relier entre eux un poteau vertical (200, 200') et un rail horizontal (400) d'un ensemble de rail de sécurité, comprenant :
une base (301) incluant une partie de réception de rail (303) et une partie de montage de poteau (322), la partie de réception de rail (303) incluant une ouverture (312) ;
une porte (332) étant reliée à pivotement à la partie de réception de rail (303),
la porte (332) présentant une position ouverte (350) et une position fermée (351), la porte (332) et la partie de réception de rail (303) formant un trou (342) lorsque la porte (332) est dans la position fermée (351), la porte (332) et la partie de réception de rail (303) étant configurées et agencées pour recevoir le rail horizontal (400) dans le trou (342) ;
un élément de fixation (345) reliant entre elles la porte (332) et la partie de réception de rail (303) dans la position fermée (351) fixant par là-même le rail horizontal (400) dedans ; et
un élément de friction (317) s'étendant par l'ouverture (312),
**caractérisé en ce que** l'élément de fixation (345) s'étend par la partie de réception de rail (303) de sorte à être capable de toucher le poteau vertical (200, 200') pour fixer le connecteur (300) au poteau vertical (200, 200').

2. Connecteur selon la revendication 1, dans lequel l'ouverture (312) est à proximité de la partie de montage de poteau (322).

3. Connecteur selon la revendication 2, dans lequel l'élément de friction (317) est configuré et agencé pour toucher le poteau vertical (200, 200') et le rail horizontal (400).

4. Connecteur selon l'une quelconque des revendications précédentes, dans lequel la base (301) inclut un côté avant (302a) et un côté arrière (302b) et la partie de réception de rail (303) inclut un premier côté (304) à proximité du coté avant (302a), un second côté (316) à proximité du côté arrière (302b) et une ouverture (318) entre le premier côté (304) et le second côté (316).

5. Connecteur selon la revendication 4, dans lequel l'ouverture (312) est à proximité du second côté (316).

6. Connecteur selon la revendication 4 ou 5, dans lequel la partie de montage de poteau (322) est à proximité du côté arrière (302b).

7. Connecteur selon l'une quelconque des revendications 4 à 6, dans lequel la porte (332) a une partie avant (333) et une partie arrière (337), la partie avant (333) étant reliée à pivotement à la partie de réception de rail (303) à proximité du côté avant (302a), la position ouverte (350) permettant l'accès à l'ouverture (318) et la position fermée (351) couvrant l'ouverture (318) empêchant par là-même l'accès à l'ouverture (318), la partie arrière (337) de la porte (332) étant à proximité du côté arrière (302b) dans la position fermée (351).

8. Connecteur selon l'une quelconque des revendications précédentes, dans lequel l'élément de fixation (345) est intégré en creux par rapport à la porte (332).

9. Connecteur selon l'une quelconque des revendications précédentes, dans lequel l'élément de friction (312) est en un matériau de caoutchouc.

10. Connecteur selon la revendication précédente, dans lequel le matériau de caoutchouc est du polyuréthane.

11. Ensemble de rail de sécurité comprenant un support de montage (100), un poteau vertical (200, 200'), un rail horizontal (400) **caractérisé en ce qu'**il comprend un connecteur selon l'une quelconque des revendications précédentes.

12. Ensemble de rail de sécurité selon l'une quelconque des revendications précédentes, dans lequel l'élément de fixation (345) est configuré et agencé pour exercer une pression sur le poteau vertical (200, 200') pour déformer le poteau vertical (200, 200') par déflexion pour empêcher le glissement de la base (301) le long du poteau vertical (200, 200').

13. Ensemble de rail de sécurité selon l'une quelconque des deux revendications précédentes, comprenant un connecteur selon la revendication 3 et dans lequel la friction exercée entre l'élément de friction (317) et le poteau vertical (200, 200') est configurée pour permettre l'ajustement du connecteur (300) le long du poteau vertical (200, 200').

14. Ensemble de rail de sécurité selon les revendications précédentes, dans lequel la friction exercée par l'élément de friction (312) sur le rail horizontal (400) est configurée pour empêcher le rail horizontal (400) de glisser par rapport au connecteur (300).
